Europäisches Patentamt

European Patent Office

Office européen des brevets

(19)

(11) Veröffentlichungsnummer : **0 189 734 B1**

(12) **EUROPÄISCHE PATENTSCHRIFT**

(45) Veröffentlichungstag der Patentschrift :
17.05.89

(51) Int. Cl.⁴ : **H 04 L   9/04**

(21) Anmeldenummer : 85810489.6

(22) Anmeldetag : 28.10.85

(54) **Verfahren und Vorrichtung für die Umwandlung einer digitalen Datensequenz in die verschlüsselte Form.**

(30) Priorität : 02.11.84 CH 5249/84

(43) Veröffentlichungstag der Anmeldung :
06.08.86 Patentblatt 86/32

(45) Bekanntmachung des Hinweises auf die Patenterteilung : 17.05.89 Patentblatt 89/20

(84) Benannte Vertragsstaaten :
AT BE CH DE FR GB IT LI LU NL SE

(56) Entgegenhaltungen :
EP—A— 0 119 972
DE—B— 2 706 421
US—A— 3 984 668
IBM TECHNICAL DISCLOSURE BULLETIN, Band 14,
Nr. 10, März 1972, Seiten 2978-2979, New York, US;
R.O. SKATRUD: "Random-key generator for ciphering
system"

(73) Patentinhaber : **Borer Communications AG**
**Solothurnstrasse 65**
**CH-4562 Biberist (CH)**

(72) Erfinder : **Massey, James L., Prof. Dr.**
**Obere Waidstrasse 17**
**CH-8037 Zürich (CH)**
Erfinder : **Rueppel, Rainer A., Dr.**
**Bahnhofstrasse 242**
**CH-8623 Wetzikon (CH)**

(74) Vertreter : **Frauenknecht, Alois J. et al**
**c/o PPS Polyvalent Patent Service AG Mellinger-**
**strasse 1**
**CH-5400 Baden (CH)**

# Beschreibung

Die vorliegende Erfindung bezieht sich auf ein Verfahren und eine Vorrichtung für die Umwandlung einer digitalen Datensequenz in eine verschlüsselte Form unter Kontrolle eines geheimen Schlüssels für die sichere Übertragung oder Speicherung durch die Kombination der digitalen Datensequenz mit einer von einem Wandler produzierten digitalen Pseudozufallssequenz, wobei im Wandler periodische digitale Sequenzen aus einem periodischen Sequenzgenerator in wenigstens einen Summierer geführt werden, wobei die digitale Summensequenz aus dem Summierer in einem Aufteiler in eine digitale Ausgangssequenz, welche die besagte Pseudozufallssequenz bildet, und in eine digitale Rückführungssequenz aufgeteilt wird, wobei die Symbole der digitalen Rückführungssequenz in einem digitalen Speicherhilfsmittel zwischengespeichert werden und die im digitalen Speicherhilfsmittel zwischengespeicherten Symbole von einem Logikhilfsmittel in die Symbole einer digitalen Hilfssequenz transformiert und zusätzlich zu den periodischen digitalen Sequenzen in den Summierer geführt werden.

Verschiedene Verschlüsselungssysteme sind bereits bekannt. So z. B. ist in der US-A-3 984 668 ein Verfahren der eingangs genannten Art veröffentlicht. Dieses Verfahren betrifft die Umwandlung einer digitalen Datensequenz in eine verschlüsselte Form unter Kontrolle eines geheimen Schlüssels. Somit wird durch die Kombination der digitalen Datensequenz mit einer von einem Wandler produzierten digitalen Pseudozufallssequenz eine sichere Übertragung oder Speicherung erreicht. Im Wandler werden periodische Digitalsequenzen aus einem periodischen Sequenzgenerator in wenigstens einen Summierer geführt. Die digitale Summensequenz aus dem Summierer wird in einem Aufteiler in eine digitale Ausgangssequenz, welche die besagte Pseudozufallsequenz bildet, und in eine digitale Rückführungssequenz aufgeteilt. Dabei werden die Symbole der digitalen Rückführungssequenz in einem digitalen Speicherhilfsmittel zwischengespeichert und die in digitalen Speicherhilfsmittel zwischengespeicherten Symbole von einem Logikhilfsmittel in die Symbole einer digitalen Hilfssequenz transformiert und zusätzlich zu den periodischen digitalen Sequenzen in den Summierer geführt.

Die Aufgabe der Erfindung liegt darin, ein Verfahren und eine Vorrichtung der eingangs genannten Art zu schaffen, die die Sicherheit der Verschlüsselung und die Komplexität der Pseudozufallssequenz bei gegebenen Mitteln wesentlich erhöhen.

Die vorgenannte Aufgabe wird dadurch gelöst, dass wenigstens zwei voneinander und von der digitalen Summensequenz unabhängige periodische digitale Sequenzen vom Sequenzgenerator erzeugt und im Summierer mit der Rückführungssequenz aufsummiert werden.

Der Vorteil der Erfindung ist darin zu sehen, dass die Kombination der Sequenzen erfindungsgemäss sowohl das Gedächtnis als auch die Rückkopplung besitzt, so dass die Verschlüsselung sicher ist und dass man mit denselben Mitteln eine komplexere Pseudozufallssequenz erreichen kann.

Die Weiterbildungen der Erfindung sind in den Unteransprüchen enthalten.

Es ist vorteilhaft, wenn als das digitale Speicherhilfsmittel ein Substitutionsblock eingesetzt wird.

Der Vorteil der Lösung gemäss dem Anspruch 2 besteht darin, dass der Substitutionsblock die Rückführung nichtlinear macht und dass bei einem zufällig gefüllten Substitutionsblock die Grösse des Wertes der digitalen Rückführungssequenz den direkten Einfluss auf die Grösse des Wertes der digitalen Hilfssequenz verliert.

Es ist zweckmässig, dass der Aufteiler das niederwertigste Bit des entsprechenden Symbols der digitalen Summensequenz als entsprechendes Symbol der Ausgangssequenz und den ganzzahligen Wert der verbleibenden Bits des entsprechenden Symbols der digitalen Summensequenz als entsprechendes Symbol der digitalen Rückführungssequenz ausgibt.

Eine vorteilhafte Weiterbildung besteht darin, dass das Symbol im digitalen Speicherhilfsmittel in seiner binären Darstellung abgespeichert wird und dass das Logikhilfsmittel bewirkt, dass einzig der ganzzahlige Wert des im digitalen Speicherhilfsmittel gespeicherten Symbols das entsprechende Symbol der digitalen Hilfssequenz bildet.

Es ist zweckmässig, wenn das Logikhilfsmittel bewirkt, dass das entsprechende Symbol der Hilfssequenz der ganzzahligen Summe der Bits des im digitalen Speicherhilfsmittel gespeicherten Symbols entspricht.

Die periodischen Sequenzen werden vorteilhaft durch Ausgangssequenzen rückgekoppelter Schieberegister gebildet.

Nach einer anderen Variante werden die periodischen Sequenzen als das logische Bit-für-Bit Produkt je einer Ausgangssequenz der rückgekoppelten Schieberegister mit je einer Aussangssequenz einer Stufe eines rückgekoppelten binären Wählschieberegisters gebildet.

Um eine zweckmässige Funktion zu sichern, werden die digitale Datensequenz und die digitale pseudozufällige Ausgangssequenz durch binäre Sequenzen gebildet, wobei die Kombination dieser beiden Sequenzen ihre Bit-für-Bit Modulo 2 Summe ist. Es ist ebenfalls zweckmässig, wenn die verschlüsselte Form der digitalen Datensequenz und die Pseudozufallssequenz durch binäre Sequenzen gebildet werden und die Kombination dieser zwei Sequenzen ihre Bit-für-Bit Modulo 2 Summe ist.

Ein geheimer Schlüssel wird die Anfangszustände aller rückgekoppelten Schieberegister und den Anfangszustand des digitalen Speicherhilfsmittels vorteilhaft bestimmen.

Bei der Entschlüsselung wird die entschlüsselte Form der digitalen Datensequenz durch Kombination ihrer verschlüsselten Form mit der digitalen Pseudozufallssequenz unter Kontrolle des geheimen Schlüssels wieder hergestellt.

Eine einfache Vorrichtung zur Durchführung des Verfahrens nach Anspruch 1, wobei der Ausgang eines Summierers mit dem Aufteiler verbunden ist, wobei der Aufteiler einerseits mit dem Ausgang für die pseudozufällige Ausgangssequenz und andererseits mit dem digitalen Speicherhilfsmittel verbunden ist, das über ein Logikhilfsmittel mit seinem Ausgang an den Eingang des Summierers angeschlossen ist, besteht darin, dass ein periodischer Sequenzgenerator mit wenigstens zwei voneinander und vom Summiererausgang unabhängigen Anschlüssen an den Summierer angeschlossen ist.

Eine zweckmässige Ausgestaltung der erfindungsgemässen Vorrichtung besteht darin, dass ein periodischer Sequenzgenerator mit wenigstens zwei voneinander und vom Summiererausgang unabhängigen Anschlüssen an einen Summierer angeschlossen ist, dessen Ausgang mit einem anderen Summierer verbunden ist, wobei der letztgenannte Summierer die Funktion eines Aufteilers aufweist, der einerseits mit dem Ausgang für die pseudozufällige Ausgangssequenz und andererseits mit einem Substitutionsblock verbunden ist, der mit seinem Ausgang an den Eingang des zweiten Summierers angeschlossen ist.

Der Erfindungsgegenstand wird anhand der Zeichnungen näher erläutert.

Es zeigt :

Fig. 1 eine beispielsweise erfindungsgemässe Ausbildung eines Kombinationsmittels, das Gedächtnis und Rückkopplung besitzt, mit einem gestrichelt gezeichneten periodischen Sequenzgenerator,

Fig. 2 eine einfache Ausbildung der erfindungsgemässen Vorrichtung,

Fig. 3 eine andere erfindungsgemässe Variante der Vorrichtung und

Fig. 4 eine weitere vorteilhafte Ausgestaltung der erfindungsgemässen Vorrichtung.

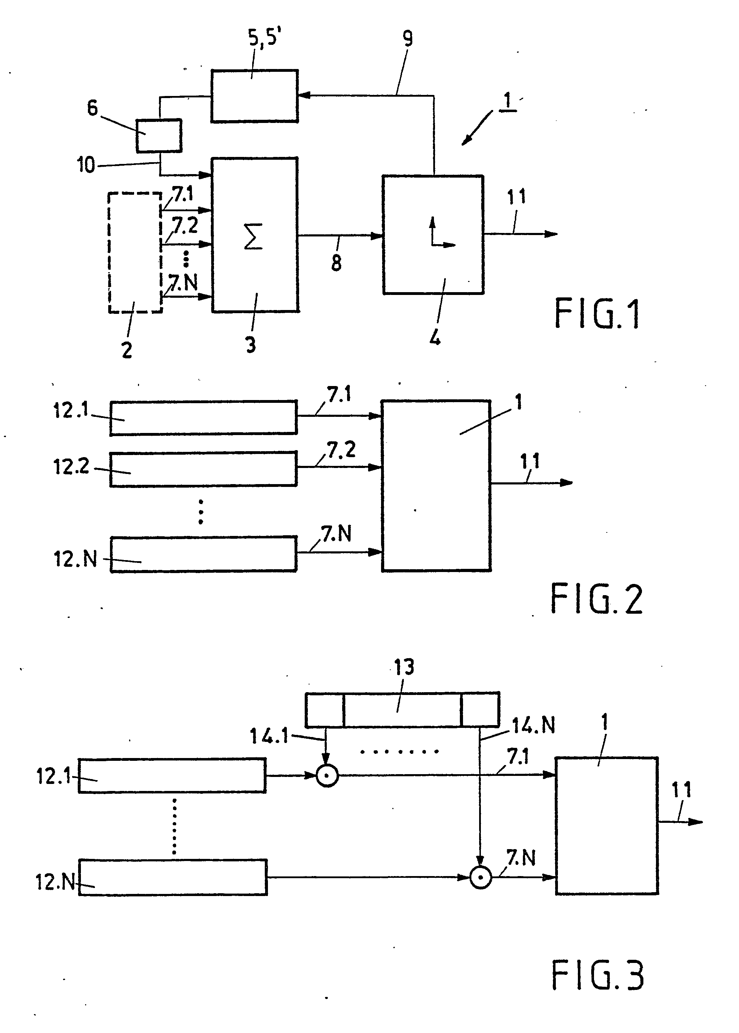

Gemäss Fig. 1 ist ein Kombinationsmittel 1 mit Gedächtnis und Rückkopplung als Blockschema dargestellt. Ein periodischer Sequenzgenerator 2 ist schematisch dargestellt und gestrichelt gezeichnet. Er ist mit mehreren Anschlüssen an einen Summierer 3 angeschlossen, dessen Ausgang mit dem Aufteiler 4 verbunden ist. Dieser Aufteiler 4 liefert einerseits die digitale pseudozufällige Ausgangssequenz 11, andererseits ist er mit dem digitalen Speichermittel 5 verbunden. Dieses digitale Speichermittel 5 ist über ein Logikhilfsmittel 6 mit seinem Ausgang an den Eingang des Summierers 3 angeschlossen. Das digitale Speicherhilfsmittel 5 kann als ein Substitutionsblock 5' ausgebildet werden.

Die Funktionsweise ist schon aus dem beschriebenen Schema ersichtlich. Der periodische Sequenzgenerator 2 liefert mehrere periodische digitale Sequenzen 7.1 bis 7.N, die im Summierer 3 summiert werden. Die digitale Summensequenz 8 wird in den Aufteiler 4 geleitet. Von der digitalen Rückführungssequenz 9 wird im digitalen Speicherhilfsmittel 5 das letzte Symbol abgespeichert. Wenn auch das Logikhilfsmittel 6 verwendet wird, produziert es eine digitale Hilfssequenz 10, die wieder an den Eingang des Summierers 3 als eine Rückkopplung angeschlossen ist. Somit erreicht man, dass zusätzlich zu den periodischen digitalen Sequenzen 7.1 bis 7.N eine digitale Hilfssequenz 10 in den Summierer 3 geführt 10, die wieder an den Eingang des Summierers 3 als eine Rückkopplung angeschlossen ist. Somit erreicht man, dass zusätzlich zu den periodischen digitalen Sequenzen 7.1 bis 7.N eine digitale Hilfssequenz 10 in den Summierer 3 geführt ist.

Gleiche Teile sind in allen Figuren mit denselben Bezugsziffern versehen.

Fig. 2 zeigt ein einfaches Schema der erfindungsgemässen Vorrichtung. Das Kombinationsmittel 1, das in der Fig. 1 enthalten ist, ist in der Fig. 2 wegen der Übersichtlichkeit mur als ein Block 1 gezeichnet. Mehrere Schieberegister 12.1 bis 12.N liefern periodische digitale Sequenzen 7.1 bis 7.N in das Kombinationsmittel 1. Bei diesem Beispiel handelt es sich um rückgekoppelte Schieberegister 12.1 bis 12.N. Die Funktion entspricht derjenigen gemäss der Fig. 1.

Fig. 3 zeigt eine andere Variante der erfindungsgemässen Vorrichtung. Auch bei dieser Ausführungsform werden mehrere Schieberegister 12.1 bis 12.N verwendet, wie dies schon in der Lösung gemäss Fig. 2 der Fall ist. Zusätzlich wird ein rückgekoppeltes binäres Wählschieberegister 13 angesetzt, dessen einzelne Stufen an die Ausgänge der digitalen Schieberegister 12.1 bis 12.N angeschlossen sind. Diese Stufen des rückgekoppelten Wählschieberegisters 13 liefern dann entsprechende Sequenzen 14.1 bis 14.N. Bei dieser Ausgestaltung erhält man besonders komplizierte und komplexe digitale pseudozufällige Ausgangssequenzen 11.

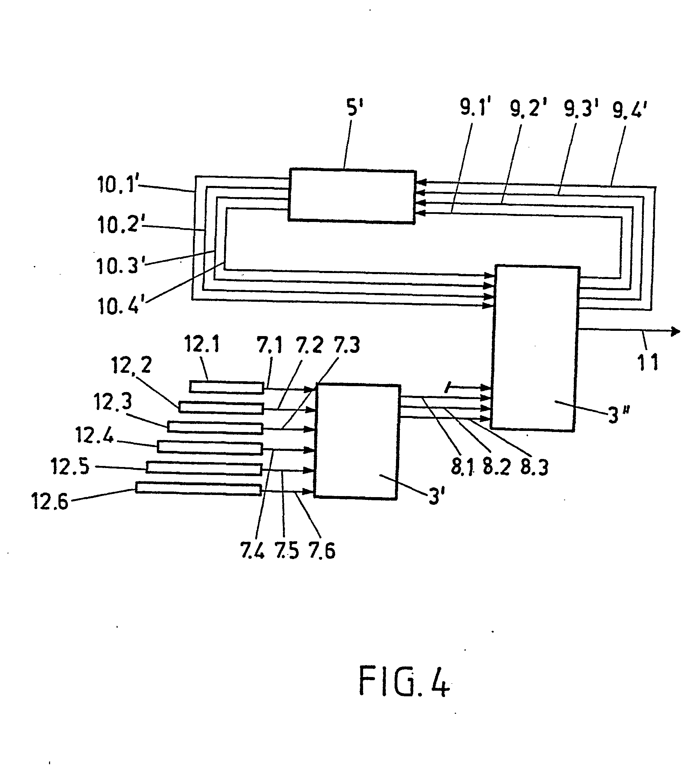

Ein zweckmässiges Beispiel ist in der Fig. 4 dargestellt. Die periodischen digitalen Sequenzen 7.1 bis 7.6 werden durch sechs rückgekoppelte Schieberegister 12.1 bis 12.6 gebildet. Im 6 × 1 Bit-Summierer 3' werden die Ausgangs-Bits der Schieberegister 12.1 bis 12.6 addiert und produzieren ein 3 Bit-Resultat. Dieses wird im 2 × 4 Bit-Summierer 3'' mit den Daten-Bits 10 addiert. Das niederwertigste Bit des Resultates dieser Addition wird als die digitale Pseudozufallssequenz 11 verwendet. Die restlichen Bits dienen als Adressen-Bits 9.1' bis 9.4' für den Substitutionsblock 5'. Die an dem Substitutionsblock 5' angelegten Adressen-Bits 9.1' bis 9.4' legen die Werte der Daten-Bits 10.1' bis 10.4' fest, die dann wieder als Eingänge zum 2 × 4 Bit-Summierer 3'' verwendet werden. Der Substitutionsblock 5' ist mittels eines handelsüblichen Lese- und Schreibspeichers (RAM) gebildet.

Es ist selbstverständlich, dass die Wandler mit verschiedenen Quellen von periodischen digitalen Sequenzen ausgerüstet werden können. Bei der Verwendung von Schieberegistern 12.1 bis 12.N, 13 kann man verschiedene Kombinationen dieser Bestandteile ansetzen.

**Patentansprüche**

1. Verfahren für die Umwandlung einer digitalen Datensequenz in eine verschlüsselte Form unter Kontrolle eines geheimen Schlüssels für die sichere Übertragung oder Speicherung durch die Kombination der digitalen Datensequenz mit einer von einem Wandler produzierten digitalen Pseudozufallssequenz, wobei im Wandler periodische digitale Sequenzen aus einem periodischen Sequenzgenerator (2) in wenigstens einen Summierer (3, 3', 3'') geführt werden, wobei die digitale Summensequenz (8) aus dem Summierer in einem Aufteiler (4) in eine digitale Ausgangssequenz (11), welche die besagte Pseudozufallssequenz bildet, und in eine digitale Rückführungssequenz (9) aufgeteilt wird, wobei die Symbole der digitalen Rückführungssequenz (9) in einem digitalen Speicherhilfsmittel (5, 5') zwischengespeichert werden und die im digitalen Speicherhilfsmittel (5, 5') zwischengespeicherten Symbole von einem Logikhilfsmittel (6) in die Symbole einer digitalen Hilfssequenz (10) transformiert und zusätzlich zu den periodischen digitalen Sequenzen (7.1 bis 7.N) in den Summierer (3 oder 3'') geführt werden, dadurch gekennzeichnet, dass wenigstens zwei voneinander und von der digitalen Summensequenz (8) unabhängige periodische digitale Sequenzen (7.1 bis 7.N) vom Sequenzgenerator erzeugt und im Summierer (3) mit der Rückführungssequenz (9) aufsummiert werden.

2. Verfahren nach Anspruch 1, dadurch gekennzeichnet, dass als das digitale Speicherhilfsmittel (5, 5') ein Substitutionsblock (5') eingesetzt wird.

3. Verfahren nach Anspruch 1, dadurch gekennzeichnet, dass der Aufteiler (4) das niederwertigste Bit des entsprechenden Symbols der digitalen Summensequenz (8) als entsprechendes Symbol der Ausgangssequenz (11) und den ganzzahligen Wert der verbleibenden Bits des entsprechenden Symbols der digitalen Summensequenz (8) als entsprechendes Symbol der digitalen Rückführungssequenz (9) ausgibt.

4. Verfahren nach Anspruch 1, dadurch gekennzeichnet, dass das Symbol im digitalen Speicherhilfsmittel (5) in seiner binären Darstellung abgespeichert wird und dass das Logikhilfsmittel (6) bewirkt, dass einzig der ganzzahlige Wert des im digitalen Speicherhilfsmittel (5) gespeicherten Symbols das entsprechende Symbol der digitalen Hilfssequenz (10) bildet.

5. Verfahren nach Anspruch 4, dadurch gekennzeichnet, dass das Logikhilfsmittel (6) bewirkt, dass das entsprechende Symbol der Hilfssequenz (10) der ganzzahligen Summe der Bits des im digitalen Speicherhilfsmittel (5) gespeicherten Symbols entspricht.

6. Verfahren nach Anspruch 1, dadurch gekennzeichnet, dass die periodischen Sequenzen (7.1 bis 7.N) durch Ausgangssequenzen rückgekoppelter Schieberegister (12.1 bis 12.N) gebildet werden.

7. Verfahren nach Anspruch 1, dadurch gekennzeichnet, dass die periodischen Sequenzen (7.1 bis 7.N) als das logische Bit-für-Bit Produkt je einer Ausgangssequenz der rückgekoppelten Schieberegister (12.1 bis 12.N) mit je einer Ausgangssequenz (14.1 bis 14.N) einer Stufe eines rückgekoppelten binären Wählschieberegisters (13) gebildet werden.

8. Verfahren nach Anspruch 1, dadurch gekennzeichnet, dass die digitale Datensequenz und die Pseudozufallssequenz (11) durch binäre Sequenzen gebildet werden und die Kombination dieser beiden Sequenzen ihre Bit-für-Bit Modulo 2 Summe ist.

9. Verfahren nach Anspruch 1, dadurch gekennzeichnet, dass die verschlüsseite Form der digitalen Datensequenz und die Pseudozufallssequenz (11) durch binäre Sequenzen gebildet werden und die Kombination dieser zwei Sequenzen ihre Bit-für-Bit Modulo 2 Summe ist.

10. Verfahren nach Anspruch 6 oder 7, dadurch gekennzeichnet, dass die Anfangszustände aller rückgekoppelten Schieberegister (12.1 bis 12.N, 13) und der Anfangszustand des digitalen Speicherhilfsmittels (5) durch einen geheimen Schlüssel bestimmt werden.

11. Verfahren nach Anspruch 1 für die Umwandlung einer verschlüsselten digitalen Datensequenz in die entschlüsselte Form, dadurch gekennzeichnet, dass die entschlüsselte Form der digitalen Datensequenz durch Kombination ihrer verschlüsselten Form mit der digitalen Pseudozufallssequenz (11) unter Kontrolle des geheimen Schlüssels wieder hergestellt wird.

12. Vorrichtung zur Durchführung des Verfahrens nach Anspruch 1, wobei der Ausgang eines Summierers (3) mit dem Aufteiler (4) verbunden ist, wobei der Aufteiler (4) einerseits mit dem Ausgang für die pseudozufällige Ausgangssequenz (11) und andererseits mit dem digitalen Speicherhilfsmittel (5) verbunden ist, das über ein Logikhilfsmittel (6) mit seinem Ausgang an den Eingang des Summierers (3) angeschlossen ist, dadurch gekennzeichnet, dass ein periodischer Sequenzgenerator (2) mit wenigstens zwei voneinander und vom Summiererausgang unabhängigen Anschlüssen an den Summierer (3) angeschlossen ist.

13. Vorrichtung zur Durchführung des Verfahrens nach Anspruch 1 und 2, dadurch gekennzeichnet, dass ein periodischer Sequenzgenerator (2) mit wenigstens zwei voneinander und vom Summiererausgang unabhängigen Anschlüssen an einen Summierer (3') angeschlossen ist, dessen Ausgang mit einem anderen Summierer (3'') verbunden ist, wobei der letztgenannte Summierer die Funktion eines Aufteilers aufweist, der einerseits mit dem Ausgang für die pseudozufällige Ausgangssequenz (11) und andererseits mit einem Substitutionsblock (5') verbunden ist, der mit seinem Ausgang an den Eingang des zweiten Summierers (3'') angeschlossen ist.

## Claims

1. Method for converting a digital data sequence into an encoded form under the control of a secret code for the secure transmission or storage through the combination of the digital data sequence with a digital pseudo-random sequence produced by a converter, wherein, in the converter, periodic digital sequences are fed by a periodic sequence generator (2) into at least one summation device (3, 3', 3"), wherein the digital summation sequence (8) emitted from the summation device is divided up in a divider (4) into a digital output sequence (11) which forms the aforesaid pseudo-random sequence, and into a digital feedback sequence (9), wherein the symbols of the digital feedback sequence (9) are intermediately stored in a digital auxiliary storage means (5, 5'), and the intermediately stored symbols in the digital auxiliary storage means (5, 5') are transformed by an auxiliary logic means (6) into the symbols of a digital auxiliary sequence (10) and additionally to the periodic digital sequences (7.1 to 7.N) are fed into the summation device (3 or 3"), characterised in that at least two periodic digital sequences (7.1 to 7.N), which are independent of one another and of the digital summation sequence (8), are produced by the sequence generator and are added up with the feedback sequence (9) in the summation device (3).

2. Method according to claim 1, characterised in that a substitution block (5') is used as the digital auxiliary storage means (5, 5').

3. Method according to claim 1, characterised in that the divider (4) emits the lowest-value bit of the corresponding symbol of the digital summation sequence (8) as corresponding symbol of the output sequence (11) and the whole-number value of the remaining bits of the corresponding symbol of the digital summation sequence (8) as corresponding symbol of the digital feedback sequence (9).

4. Method according to claim 1, characterised in that the symbol is stored in the digital auxiliary storage means (5) in its binary notation, and in that the auxiliary logic means (6) ensures that only the whole-number value of the symbol stored in the digital auxiliary storage means (5) forms the corresponding symbol of the digital auxiliary sequence (10).

5. Method according to claim 4, characterised in that the auxiliary logic means (6) ensures that the corresponding symbol of the auxiliary sequence (10) corresponds to the whole-number sum of the bits of the symbol stored in the digital auxiliary storage means (5).

6. Method according to claim 1, characterised in that the periodic sequences (7.1 to 7.N) are formed by output sequences of feedback shifting registers (12.1 to 12.N).

7. Method according to claim 1, characterised in that the periodic sequences (7.1 to 7.N) are formed as the logical bit-for-bit product, in each case, of an output sequence of the feedback shifting registers (12.1 to 12.N) with, in each case, an output sequence (14.1 to 14.N) of a stage of a feedback binary selective shifting register (13).

8. Method according to claim 1, characterised in that the digital data sequence and the pseudo-random sequence (11) are formed by binary sequences, and the combination of these two sequences is their bit-for-bit modulo 2 sum.

9. Method according to claim 1, characterised in that the encoded form of the digital data sequence and the pseudo-random sequence (11) are formed by binary sequences, and the combination of these two sequences is their bit-for-bit modulo 2 sum.

10. Method according to claim 6 or 7, characterised in that the initial states of all the feedback shifting registers (12.1 to 12.N, 13) and the initial state of the digital auxiliary storage means (5) are determined by a secret code.

11. Method according to claim 1, for converting an encoded digital data sequence into the decoded form, characterised in that the decoded form of the digital data sequence is produced by combination of its coded form with the digital pseudo-random sequence (11) under control of the secret code.

12. Device for operating the method according to claim 1, wherein the output of a summation device (3) is connected to the divider (4), wherein the divider (4) is connected on the one hand to the output for the pseudo-random output sequence (11) and on the other hand to the digital auxiliary storage means (5), which latter is connected, via an auxiliary logic means (6), with its output, to the input of the summation device (3), characterised in that a periodic sequence generator (2) is connected to the summation device (3) with at least two connections which are independent of one another and of the summation device output.

13. Device for operating the method according to claim 1 and 2, characterised in that a periodic sequence generator (2), with at least two connections which are independent of one another and of the summation device output, is connected to a summation device (3') whose output is connected to another summation device (3"), wherein the last-mentioned summation device has the function of a divider which is connected on the one hand to the output for the pseudorandom output sequence (11) and on the other hand is connected to a substitution block (5') which is connected, with its output, to the input of the second summation device (3").

## Revendications

1. Procédé pour convertir une séquence de données numériques en une forme chiffrée sous le contrôle d'un code secret pour la transmission ou le stockage sûr par la combinaison de la séquence de données numériques avec une séquence numérique pseudo-aléatoire produite par un convertisseur, des séquences numériques périodiques provenant d'un générateur de séquences périodiques (2) étant envoyées, dans le convertisseur, à au moins un totalisateur (3, 3', 3''), la séquence de somme numérique (8) provenant du totalisateur étant scindée, dans un découpeur (4), en une séquence de sortie numérique (11) qui constitue ladite séquence pseudo-aléatoire et une séquence numérique de retour (9), les symboles de la séquence numérique de retour (9) étant stockés dans une mémoire numérique auxiliaire (5, 5') et les symboles stockés dans la mémoire numérique auxiliaire (5, 5') étant convertis par un circuit logique auxiliaire (6) en symboles d'une séquence numérique auxiliaire (10) et transmis, en plus des séquences numériques périodiques (7.1 à 7.N), au totalisateur (3 ou 3''), caractérisé en ce qu'au moins deux séquences numériques périodiques (7.1 à 7.N) indépendantes l'une de l'autre et de la séquence de somme numérique (8) sont produites par le générateur de séquences et additionnées dans le totalisateur (3) avec la séquence de retour (9).

2. Procédé selon la revendication 1, caractérisé en ce qu'un bloc de substitution (5') est utilisé comme mémoire numérique auxiliaire (5, 5').

3. Procédé selon la revendication 1, caractérisé en ce que le découpeur (4) délivre le bit de poids faible du symbole considéré de la séquence de somme numérique (8) en tant que symbole correspondant de la séquence de sortie (11) et la valeur entière des bits restants du symbole considéré de la séquence de somme numérique (8), en tant que symbole correspondant de la séquence numérique de retour (9).

4. Procédé selon la revendication 1, caractérisé en ce que le symbole stocké dans la mémoire numérique auxiliaire (5) est mémorisé sous sa forme binaire et que le circuit logique auxiliaire (6) a pour effet que seule la valeur entière du symbole stocké dans la mémoire numérique auxiliaire (5) forme le symbole correspondant de la séquence numérique auxiliaire (10).

5. Procédé selon la revendication 4, caractérisé en ce que le circuit logique auxiliaire (6) a pour effet que le symbole considéré de la séquence auxiliaire (10) correspond à la somme entière des bits du symbole stocké dans la mémoire numérique auxiliaire (5).

6. Procédé selon la revendication 1, caractérisé en ce que les séquences périodiques (7.1 à 7.N) sont constituées par des séquences de sortie de registres de décalage à boucle fermée (12.1 à 12.N).

7. Procédé selon la revendication 1, caractérisé en ce que les séquences périodiques (7.1 à 7.N) sont formées en tant que produit bit-par-bit logique de respectivement une séquence de sortie des registres de décalage à boucle fermée (12.1 à 12.N) par respectivement une séquence de sortie (14.1 à 14.N) d'un étage d'un registre binaire de sélection à décalages à boucle fermée (13).

8. Procédé selon la revendication 1, caractérisé en ce que la séquence de données numériques et la séquence pseudo-aléatoire (11) sont formées par des séquences binaires, et que la combinaison de ces deux séquences est leur somme bit-par-bit modulo 2.

9. Procédé selon la revendication 1, caractérisé en ce que la forme chiffrée de la séquence de données numériques et la séquence pseudo-aléatoire (11) sont constituées par des séquences binaires et que la combinaison de ces deux séquences donne leur somme bit-par-bit modulo 2.

10. Procédé selon l'une des revendications 6 ou 7, caractérisé en ce que les états initiaux de tous les registres de décalage à boucle fermée (12.1 à 12.N, 13) et l'état initial de la mémoire numérique auxiliaire (5) sont déterminés par un code secret.

11. Procédé selon la revendication 1 pour convertir une séquence de données numériques codées en une forme décodée, caractérisé en ce que la forme décodée de la séquence de données numériques est rétablie par la combinaison de sa forme chiffrée avec la séquence numérique pseudo-aléatoire (11) sous le contrôle du code secret.

12. Dispositif pour la mise en œuvre du procédé selon la revendication 1, dans lequel la sortie d'un totalisateur (3) est reliée au découpeur (4), ledit découpeur (4) étant relié, d'une part, à la sortie pour la séquence de sortie pseudo-aléatoire (11) et, d'autre part, à la mémoire numérique auxiliaire (5) dont la sortie est reliée, par l'intermédiaire d'un circuit logique auxiliaire (6), à l'entrée du totalisateur (3), caractérisé en ce qu'un générateur de séquences périodiques (2) est connecté au totalisateur (3) avec au moins deux branchements indépendants l'un de l'autre et de la sortie du totalisateur.

13. Dispositif pour la mise en œuvre du procédé selon les revendications 1 et 2, caractérisé en ce qu'un générateur de séquences périodiques (2) est relié, par au moins deux branchements indépendants l'un de l'autre et de la sortie du totalisateur, à un totalisateur (3') dont la sortie est reliée à un autre totalisateur (3''), ce dernier assumant la fonction d'un découpeur qui est connecté, d'une part, à la sortie pour la séquence de sortie pseudo-aléatoire (11) et, d'autre part, à un bloc de substitution (5') dont la sortie est branchée sur l'entrée du second totalisateur (3'').

FIG.1

FIG.2

FIG.3

FIG. 4